# EUROPEAN PATENT SPECIFICATION

(11) **EP 1 994 797 B1**
(45) Date of publication and mention of the grant of the patent: **21.07.2010**
(21) Application number: 07756863.2
(22) Date of filing: 12.02.2007
(51) Int. Cl.: H05B 3/84

(54) **PRINTABLE CONTROLS FOR A WINDOW ASSEMBLY**
BEDRUCKBARE STEUERUNGEN FÜR EINE FENSTERBAUGRUPPE
COMMANDES IMPRIMABLES POUR UN ENSEMBLE FENETRE

(30) Priority: 21.02.2006 US 358526
(43) Date of publication of application: 26.11.2008
(73) Proprietor: Exatec, LLC., Wixom, MI 48393 (US)
(72) Inventor: SCHWENKE, Robert, Fowlerville, MI 48836 (US)
(74) Representative: Solf, Alexander
(86) International application number: PCT/US2007/061975
(87) International publication number: WO 2007/098325

(56) References cited:
- EP-A- 1 313 166
- WO-A-99/66588
- WO-A-2004/025995
- WO-A-2005/024159
- WO-A1-99/58795
- US-A- 5 999 136

## Description

### BACKGROUND

### 1. Field of the Invention

The present invention generally relates to a window assembly for a vehicle comprising a transparent panel and a control integrated into the transparent panel.

### 2. Description of Related Art

Vehicle controls such as switches for keyless entry, door control, or window control, are typically mounted to the vehicle in a control compartment and covered with a face plate. This is typically done to allow wiring to the control to be hidden inside body panels. Further, face plates are used to blend the control with the aesthetics of the vehicle. Designing controls in a package that conforms to the appearance of each vehicle would require additional cost, inventory, and manufacturing problems that are highly undesirable. In addition, the space requirements and integrity of electrical connections of commercially produced controls can often be compromised in harsh automotive environments.

In addition, typical automotive controls are manipulated mechanically. Mechanically manipulated controls wear over time which can lead to failure of the control. This may increase warranty costs and reflect on the perceived quality of the vehicle.

EP 1 313 166 A1 discloses a multiservice advanced antenna, formed by a set of polygonal elements, supported by a transparent conductive layer coated on the transparent window of a motor vehicle.

WO 2005/024159 A1 relates to a device for receiving signals for controlling a function in a vehicle, particularly for actuating the central locking of the vehicle, comprising an antenna, which receives the signals, and comprising an evaluation unit, which is connected down therefrom and which evaluates the received signals, and a control of the function ensues based on the evaluation of these signals. The antenna is mounted in or on the motor vehicle. Especially, an antenna structure is mounted into or on the rear windshield. According to WO 2005/024159 A1 a matching unit is connected between the antenna and the evaluation unit and matches the actual impedance of the antenna to the input impedance of the evaluation unit.

US Patent 5,99,136 provides for the use of electroconductive ceramic thermoplastic, thermoset and ultraviolet radiation curable paints as antenna elements and/or connector elements in a transparent antenna system. Antenna elements are formed on a major surface of a rigid transparent ply, preferably glass, and connected to a connector that permits transfer of signals generated by the antenna element to an electromagnetic energy transmitting and/or receiving device. The connector may be in direct electrical contact with or capacitively coupled to the antenna element. If desired, additional rigid transparent plies may be secured to the first ply to form a laminate, wherein the antenna element or the antenna element and the connector are laminated between the rigid plies. The antenna system can be used in a motor vehicle.

WO 99/58795 A discloses a tap sensitive keypad assembly that includes a keypad mounted on a glass panel of a vehicle and a vibration responsive sensor mounted behind the keypad and responsive to a vibration type signal. A template for the keypad can be printed on an outer or inner surface of the glass panel. In response to the vibration type signal, the sensor provides an electrical signal to activate a mechanism, such as a door latch of the vehicle.

In view of the above, it is apparent that there exists a need for a window assembly comprising an improved control.

### SUMMARY

In satisfying the above need, as well as overcoming the enumerated drawbacks and other limitations of the related art, the present invention provides a window assembly of a vehicle comprising a transparent panel and a control integrated into the panel according to claim 1.

The window assembly includes a control integrated into the window assembly and configured to receive user input. The control comprises conductive traces that are printed onto the glazing panel of window. The glazing panel may be a single layer or a multilayer glass or plastic (such as a polycarbonate or other suitable material) and the control itself may comprise a capacitive control. When assembled in the vehicle, the control is in electrical communication with a controller that is configured to control various vehicle subsystems, such as a keyless entry system or a window control subsystem based on the control.

In another aspect of the present invention, the control may be a resistive-capacitive control. As such, a resistive element and capacitive element are arranged in parallel electrical connection forming an RC time constant. The controller may detect changes in the RC time constant to interpret manipulation of the control based on the resultant resistive or capacitive change in the control.

Further objects, features and advantages of this invention will become readily apparent to persons skilled in the art after a review of the following description, with reference to the drawings and claims that are appended to and form a part of this specification.

### BRIEF DESCRIPTION OF THE DRAWINGS

FIG. 1 is a schematic view of a window assembly for receiving user control input in accordance with one embodiment of the present invention;

FIG. 2 is a schematic view of a capacitive control for receiving user input in a window assembly;

FIG. 3 is a schematic view of another capacitive control for receiving user input in a window assembly;

FIG. 4 is a schematic view of another capacitive control for receiving user input in a window assembly;

FIG. 5 is a schematic view of yet another capacitive control for receiving user input in a window assembly;

FIG. 6 is a schematic view of a resistive-capacitive (RC) control for receiving user input in a window assembly;

FIG. 7 is a schematic view of another RC control for receiving user input in a window assembly; and

FIG. 8 is a graph illustrating the input and output signal of a RC control for receiving user input in a window assembly.

### DETAILED DESCRIPTION

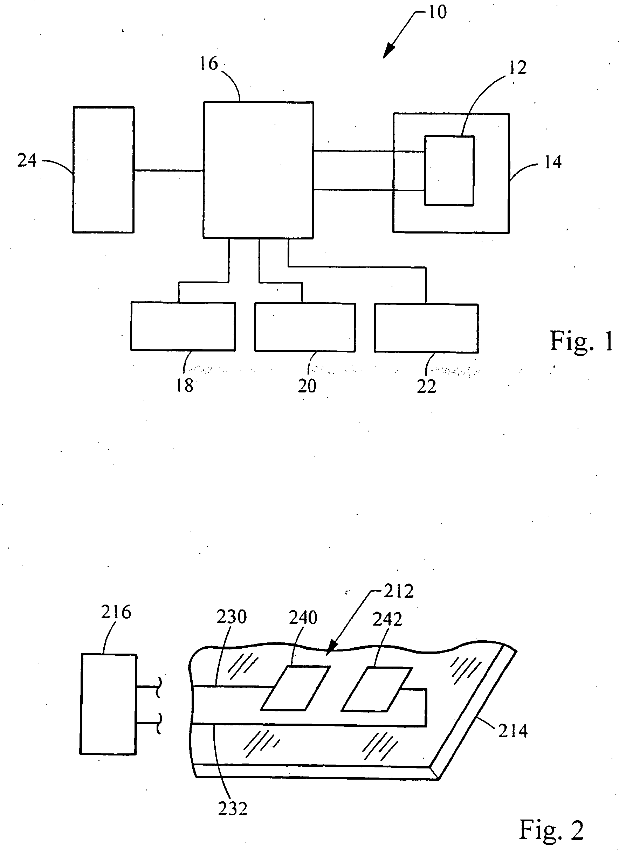

Referring now to Figure 1, a system embodying the principles of the present invention is schematically illustrated therein and designated at 10. As its primary components, the system 10 includes a control 12 integrated with a transparent panel of a window assembly 14, and in electrical communication with a controller 16. In its simplest form the control 12 comprises a switch, although it is readily contemplated that a series of switches or analog circuits may be used to form more complex switches such as a slide or dial control. As such, the control 12 may produce a change in resistance, capacitance, or other electrical property that may be detected by the controller 16 in response to user manipulation of the control 12.

The window assembly 14 may be a common glass window. Although, preferably the window assembly 14 is formed of a panel of a plastic material, for example polycarbonate, or other suitable material. Accordingly, the control 12 may be printed or applied to the window assembly 14 using known techniques and a conductive ink or paste, such as those known in the industry for being applied to glass or plastic panels. Various materials may be used for the control 12 based on the particular application. However, copper, nickel, ceramic, and silicon may have particularly desirable attributes in many applications.

The window assembly 14 may comprise a common, transparent glass panel. Although, preferably the window assembly 14 comprises a transparent plastic panel, for example a polycarbonate panel. Accordingly, the control 12 may be printed or applied to the panel using known techniques and a conductive ink or conductive polymer, such as those known in the industry for being applied to glass or plastic panels. Various materials may be used based on the particular application. An example of a conductive ink includes metallic pigmented inks comprising pigments of silver, copper, zinc, aluminum, magnesium, nickel, tin, silicon, or mixtures and alloys of the like. Examples of conductive polymers include but are not limited to polyaniline and polythiophene (i.e., Baytron® polymers, H. C. Starck GmbH, Germany).

Other materials used to form the control 12 include conductive films. Conductive films may comprise but are not limited to indium tin oxide (ITO), indium doped zinc oxide (IZO), and aluminum doped zinc oxide. Conductive films may be applied to the transparent panel by any suitable technique known to those skilled in the art, including but not limited to vacuum deposition processes, such as plasma enhanced chemical vapor deposition, ion assisted plasma deposition, magnetron sputtering, electron beam evaporation, and ion beam sputtering. Further, any traces, pads, resistive elements or capacitive elements later described herein may be formed from such conductive pigmented ink, conductive polymer, or conductive film.

The window assembly may further comprise opaque regions such as a frame as obtained via printing an ink on the panel or through the use of a two-shot molding process. Other opaque regions may comprise fade-out dots, logos, and the like. In a two-shot molding process, the opaque second shot of plastic resin may be of a similar or different plastic resin composition than the first transparent shot of resin. The transparent resin may further comprise additives, such as colorants to tint the panel to a desired color.

The controller 16 provides a current or voltage signal to the control 12. As the user touches the control 12 on the window assembly 14, the control 12 affects the driving signal from the controller 16 based on a change in the capacitive field. The controller 16 then interprets the effects on the driving signal to detect an electrical property change in the control 12. The control 12 is configured as a switch and the electrical property change is used to identify if the switch is active or inactive, thereby determining the state of the switch.

The controller 16 may use information about the state of the switch to control other vehicle subsystems. For example, the controller 16 may control a keyless entry system 18 to activate the vehicle security system, deactivate the vehicle security system, lock the vehicle, and unlock the vehicle based on the control 12. In a similar example, the controller 16 may be used to control a vehicle defroster subsystem 20. Accordingly, the controller 16 may activate the defroster, increase defrosting, or decrease defrosting based on the control 12.

In yet another example, the controller 16 is in electrical communication with a window positioning system 22. As such, controller 16 may control opening or closing of the window. Similarly, the controller 16 may be in communication with a sunroof/moonroof positioning system 24, to control the position of the sunroof/moonroof based on the control 12.

Now referring to Figure 2, a control 212 is shown therein as a capacitive control. Traces 230 and 232 are provided to electrically connect a controller 216 to the control 212 and may be applied to the panel 214 using a conductive ink. The control 212 includes a first pad 240 and a second pad 242 that may be applied to the window as a conductive ink. The first and second pads 240, 242 may be located adjacent to one another on a surface of the transparent panel 214, such as a polycarbonate panel. In a multilayer construction of the transparent panel 214, the pads 240 and 242 may be located on separate layers or under one or more protective layers applied to the main panel. With the pads 240 and 242 on separate layers, the pads 240 and 242 may be overlapped with one another to provide a greater capacitive surface area and thereby increase the sensitivity of the control 212. Accordingly, a first trace 230, connected to the first pad 240, and a second trace 232, connected to the second pad 242, connect the pads 240, 242 to the controller 216. As such, the controller 216 provides a driving signal that travels along trace 230, through the capacitive element formed by the first and second pad 240, 242 and returns through trace 232. The controller 216 is configured to measure the change in voltage or current across the first and second pad 240, 242 to detect and interpret the state of the control 212 and transparent panel 214.

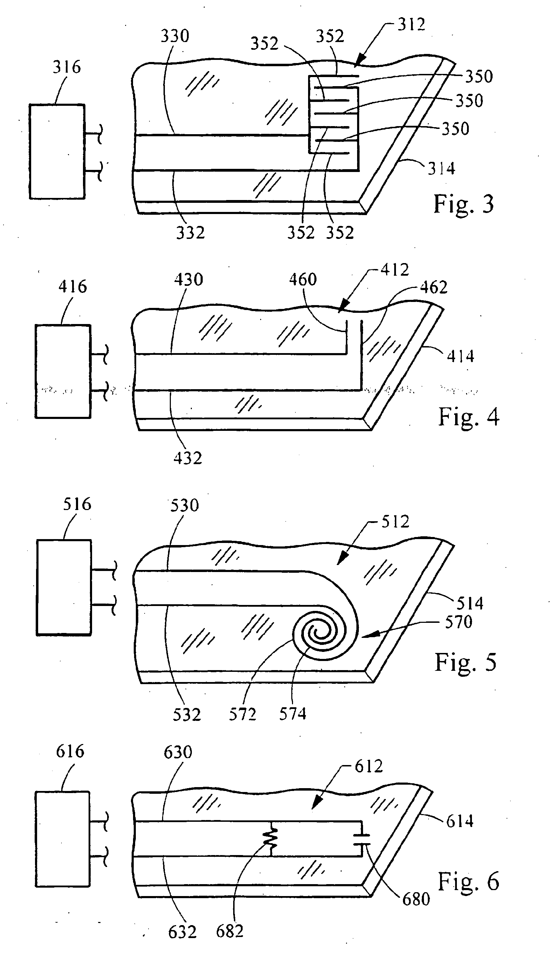

Now referring to Figure 3, another embodiment of a capacitive control is provided. Traces 330 and 332 are provided to electrically connect a controller 316 to a control 312 and have the same variations as described above. The control 312 includes a first series of traces 350 and a second series of traces 352 that form a mating pattern 354. The first and second series of traces 350, 352 may be applied to a surface of the transparent panel 314, as noted above, and the transparent panel 314 may be of a multilayer construction such that the first series of traces 350 may be located on a separate layer from the second series of traces 352, thereby providing insulation between the two series of traces 350, 352. If located on separate layers, the first and second series 350, 352 may overlap one another to improve the capacitive effect. By measuring the change in voltage or current across the mating pattern of the control 312, or more specifically the first and second series of traces 350, 352, the controller 316 can detect and interpret the state of the control 312 and transparent panel 314.

Now referring to Figure 4, another embodiment of a capacitive control is provided. Traces 430 and 432 are provided to electrically connect a controller 416 to a control 412 and have the same variations as described above. The control 412 includes a first trace 460 and a second trace 462 located in close parallel proximity to one another on the transparent panel 414. In the event the transparent panel 414 is a multilayer window, the first and second traces 460, 462 may be located on separate layers thereby providing insulation between the first and second traces 460, 462. In such a construction, the first and second traces 460, 462 may overlap, thereby improving visibility through the window and increasing the capacitive surface area to improve the capacitive effect. As in the prior embodiments, the controller 416 is configured to measure the change in voltage or current across the first and second traces 460, 462 so as to detect and interpret the state of the control 412 and transparent panel 414.

Now referring to Figure 5, yet another capacitive control is provided. Traces 530 and 532 are provided to electrically connect a controller 516 to a control 512 and have the same variations as described above. The control 512 includes a first trace 572 and a second trace 574 that form a spiral pattern 570. Throughout the spiral pattern 570, the first and second traces 572, 574 may be substantially maintained equidistantly apart or may have varying distances based on the geometry of the spiral pattern 570. The spiral pattern 570 may be ovoid or even circular, thereby providing improved capacitance and reduced pattern size on the transparent panel 514. As described above in connection with the prior embodiments, the first and second traces 572, 574 may be located on separate layers of the transparent panel 514 and may overlap one another. The controller 516 is configured to measure the change in capacitance of across the first and second trace 572, 574 to detect a change in the state of the control 512.

Now referring to Figure 6, a resistive-capacitive circuit is provided. This control 612 includes a resistive element 682 and a capacitive element 680 (shown in schematic form) provided in an electrically parallel connection. As such, the resistive and capacitive elements 682, 680 may be configured to change resistive and/or capacitive properties based on single or multiple user manipulated parameters. For example, the controller 616 may provide a pulsed signal that may be affected by the time constant generated by the combination of the resistive element 682 and capacitive element 680. Accordingly, the controller 616 may sense the change in time constant to determine the change in that state of the control 612. In one embodiment, the resistive element 682 may change state based on temperature while the capacitive element 680 may be constant or also change state based on temperature. In another embodiment, the resistive element 682 may be configured to change state based on temperature while the capacitive element 680 may be configured to change state based on a change in the capacitive field. The combination of the change in resistive element 682 and the change in the capacitive element 680 provides an output that varies with respect to multiple indications that the user is activating the control. As such, the controller 616 may interpret the affect of the time constant on the signal to extract information separately about the resistive and capacitive changes received by the control 612, to improve manipulation or reliability of the control 612.

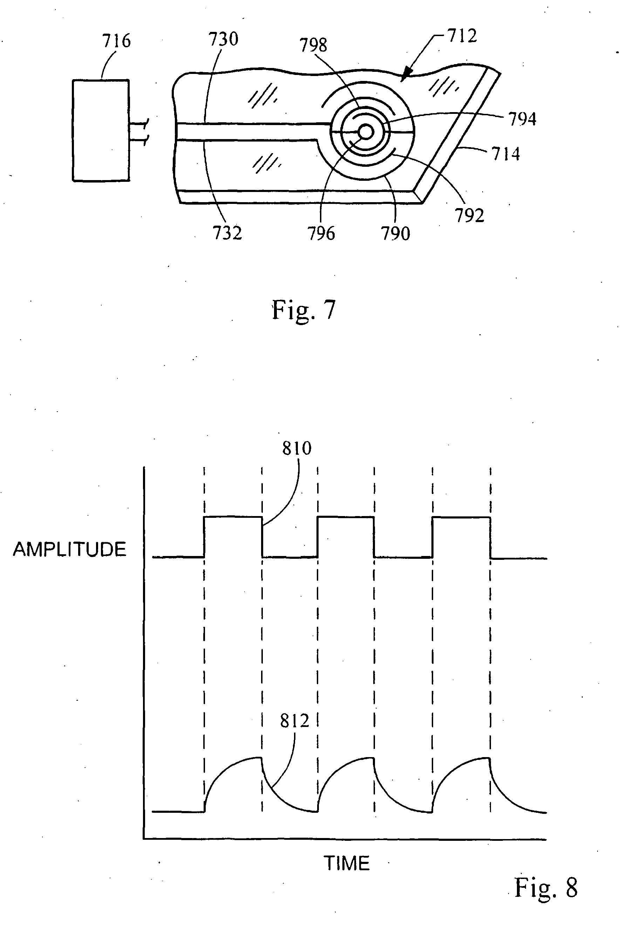

Now referring to Figure 7, yet another embodiment of a resistive-capacitive control 712 is provided. The control 712 includes a first series of traces 790 mating with a second series of traces 792 and thereby provides a capacitive element. In addition, a resistive element 798 is attached between a first portion 794 of the first series of traces 790 and a second portion 796 of the second series of traces 792. The mating pattern formed by the first and second series of traces 790, 792 has a generally circular shape wherein the first and second series of traces 790, 792 form interfitting rings, for example concentric rings to enhance the capacitive effects of the control 712. Each of the resistive element 798 and the first and second series of traces 790, 792 may be applied to the window 714 as a conductive ink as previously discussed. The first and second series of traces 790, 792, along with the resistive element 798 form a resistive-capacitive control as generally described above in connection with Figure 7.

Now referring to Figure 8, a graph illustrating the driving signal and the effect of the RC time constant, as mentioned with regard to Figures 6 and 7, is provided. A driving signal 810 is provided from the controller 16, for example by a pulse width modulator. The frequency and duty cycle of the driving signal may vary based on the application. Using a high frequency driving signal may provide easier conductivity adaptations between the controller 16 and the control 12 and may enhance the capacitive nature of the control 12. Although decreasing the frequency of the driving signal 810 may allow for increase sampling of the resulting signal 812 and provide for increased resolution in determining the capacitive and resistive changes corresponding to the state of the control 12. As noted, the resulting signal 812 has a waveform having a frequency and duty cycle corresponding to the driving signal 810. However, the RC time constant formed by the resistive and capacitive element of the control 12 creates a generally saw-tooth wave based on the resistive and capacitive electrical parameters of control 12. As such, the shape of the rising and falling curved portions of the saw-tooth waveform will change in curvature based on changes in the state of the control around the control 12 and window assembly 14, according to the resultant resistive and capacitive changes in the control 12.

## Claims

1. A window assembly (14, 214, 314, 414, 514, 614, 714) for a vehicle, the window assembly (14, 214, 314, 414, 514, 614, 714), comprising a transparent panel, a control (12, 212, 312, 412, 512, 612, 712) integrated into the transparent panel and configured to detect user input based on a change in the electrical property of the control (12, 212, 312, 412, 512. 612, 712), **characterized by** the control (12, 212, 312, 412, 512. 612, 712) being a switch activate by touching the transparent panel proximate the switch, and herein the control (12, 212, 312, 412, 512. 612, 712) comprises one of a conductive ink printed onto the transparent panel, a conductive film and a conductive polymer.

2. The window assembly (14, 214, 314, 414, 514, 614, 714) according to claim 1, wherein the transparent panel comprises a glass panel.

3. The window assembly (14, 214, 314, 414, 514, 614, 714) according to claim 1, wherein the transparent panel comprises a plastic panel.

4. The window assembly (14, 214, 314, 414, 514, 614, 714) according to claim 3, wherein the plastic glazing includes a polycarbonate panel.

5. The window assembly (14, 214, 314, 414, 514, 614, 714) according to claim 4, wherein the polycarbonate panel is a multilayer polycarbonate panel and a first portion of the control (12, 212, 312, 412, 512, 612, 712) is located on a surface of a first layer of the multilayer polycarbonate panel and a second portion of the control (12, 212, 312, 412, 512, 612, 712) is located on a surface of a second layer of the multilayer polycarbonate panel.

6. The window assembly (14, 214, 314, 414, 514, 614, 714) according to claim 1, further comprising a controller (16, 216, 316, 416, 516, 616, 716) in electrical communication with the control (12, 212, 312, 412, 512, 612, 712).

7. The window assembly (14, 214, 314, 414, 514, 614, 714) according to claim 6, wherein the control (12, 212, 312, 412, 512, 612, 712) is configured to control a vehicle defroster (20) based on a state of the control (12, 212, 312, 412, 512, 612, 712).

8. The window assembly (14, 214, 314, 414, 514, 614, 714) according to claim 6, wherein the control (12, 212, 312, 412, 512, 612, 712) is configured to control a window positioning system (22) based on a state of the control (12, 212, 312, 412, 512, 612, 712).

9. The window assembly (14, 214, 314, 414, 514, 614, 714) according to claim 1, wherein the control (12, 212, 312, 412, 512, 612, 712) includes a capacitive control.

10. The window assembly (14, 214, 314, 414, 514, 614, 714) according to claim 9, **characterized by** a first portion of the capacitive control is on a first layer of the transparent panel and a second portion of the capacitive control is on a second layer of the transparent panel.

11. The window assembly (214) according to claim 1, wherein the control (212) includes a first and second trace (230, 232), each trace (230, 232) being in electrical communication with a pad (240, 242) proximately located on the transparent panel, where the pad (240, 242) has a width greater than the width of the trace (230, 232).

12. The window assembly (314, 714) according to claim 1, wherein the control (312, 712) includes a plurality of traces (350, 352, 790, 792) in an interfitting pattern.

13. The window assembly (514) according to claim 1, wherein the control (512) includes traces (572, 574) formed in a spiral pattern (570).

14. The window assembly (614, 714) according to claim 1, wherein the control (612, 712) comprises a resistive (682, 798) and capacitive (680, 790 & 792) element.

15. The window assembly (614, 714) according to claim 14, wherein the resistive (682) and capacitive element (680) are in parallel electrical connection.

16. The window assembly (614, 714) according to claim 15, wherein the resistive (682, 798) and capacitive element (680, 790 & 792) form a time constant, and are configured to affect a driving signal (810) based on the time constant.

17. The window assembly (614, 714) according to claim 16, wherein the time constant being configured to change based on the state of the control (612, 712).

18. The window assembly (614, 714) according to claim 17, further comprising a controller (616, 716) configured to sense the change in time constant to detect a change in the state of the control (612, 712).

## Patentansprüche

1. Eine Fensterbaugruppe (14, 214, 314, 414, 514, 614, 714) für ein Fahrzeug, wobei die Fensterbaugruppe (14, 214, 314, 414, 514, 614, 714) eine transparente Scheibe, eine Steuerungseinrichtung (12, 212, 312, 412, 512, 612, 712) umfasst, die in die transparente Scheibe integriert ist und so gestaltet ist, dass sie eine Anwender-Eingabe auf der Grundlage einer Änderung in der elektrischen Eigenschaft der Steuerungseinrichtung (12, 212, 312, 412, 512, 612, 712) detektiert ,
**dadurch gekennzeichnet, dass**
die Steuerungseinrichtung (12, 212, 312, 412, 512, 612, 712) ein Schalter ist, der durch Berühren der transparenten Scheibe nahe dem Schalter aktiviert wird, und wobei die Steuerungseinrichtung (12, 212, 312, 412, 512, 612, 712) eine leitfähige, auf die transparente Scheibe aufgedruckte Tinte, eine leitfähige Folie oder ein leitfähiges Polymer aufweist.

2. Die Fensterbaugruppe (14, 214, 314, 414, 514, 614, 714) nach Anspruch 1, wobei die transparente Scheibe eine Glasscheibe umfasst.

3. Die Fensterbaugruppe (14, 214, 314, 414, 514, 614, 714) nach Anspruch 1, wobei die transparente Scheibe eine Kunststoffscheibe umfasst.

4. Die Fensterbaugruppe (14, 214, 314, 414, 514, 614, 714) nach Anspruch 3, wobei die Kunststoff-Verglasung eine Polycarbonat-Scheibe umfasst.

5. Die Fensterbaugruppe (14, 214, 314, 414, 514, 614, 714) nach Anspruch 4, wobei die Polycarbonat-Scheibe eine mehrschichtige Polycarbonat-Scheibe ist und ein erster Teil der Steuerungseinrichtung (12, 212, 312, 412, 512, 612, 712) auf einer Oberfläche einer ersten Schicht der mehrschichtigen Polycarbonat-Scheibe angeordnet ist, und ein zweiter Teil der Steuerungseinrichtung (12, 212, 312, 412, 512, 612, 712) auf einer Oberfläche einer zweiten Schicht der mehrschichtigen Polycarbonat-Scheibe angeordnet ist.

6. Die Fensterbaugruppe (14, 214, 314, 414, 514, 614, 714) nach Anspruch 1, wobei die Fensterbaugruppe (14, 214, 314, 414, 514, 614, 714) weiterhin einen Kontroller (16, 216, 316, 416, 516, 616, 716) in elektrischer Verbindung mit der Steuerungseinrichtung (12, 212, 312, 412, 512, 612, 712) umfasst.

7. Die Fensterbaugruppe (14, 214, 314, 414, 514, 614, 714) nach Anspruch 6, wobei die Steuerungseinrichtung (12, 212, 312, 412, 512, 612, 712) zur Steuerung eines Fahrzeug-Enteisers (20) auf der Grundlage eines Zustands der Steuerungseinrichtung (12, 212, 312, 412, 512, 612, 712) ausgelegt ist.

8. Die Fensterbaugruppe (14, 214, 314, 414, 514, 614, 714) nach Anspruch 6, wobei die Steuerungseinrichtung (12, 212, 312, 412, 512, 612, 712) zur Steuerung eines Fenster-Positioniersystems (22) auf der Grundlage eines Zustands der Steuerungseinrichtung (12, 212, 312, 412, 512, 612, 712) ausgelegt ist.

9. Die Fensterbaugruppe (14, 214, 314, 414, 514, 614, 714) nach Anspruch 1, wobei die Steuerungseinricfitung (12, 212, 312, 412, 512, 612, 712) eine kapazitive Steuerungseinrichtung umfasst.

10. Die Fensterbaugruppe (14, 214, 314, 414, 514, 614, 714) nach Anspruch 9, **dadurch gekennzeichnet, dass** ein erster Teil der kapazitiven Steuerungseinrichtung sich auf einer ersten Schicht der transparenten Scheibe befindet und ein zweiter Teil der kapazitiven Steuerungseinrichtung sich auf einer zweiten Schicht der transparenten Scheibe befindet.

11. Die Fensterbaugruppe (214) nach Anspruch 1, wobei die Steuerungseinrichtung (212) eine erste und eine zweite Leiterbahn (230, 232) umfasst, wobei sich jede Leiterbahn (230, 232) in elektrischer Verbindung mit einem Pad (240, 242) befindet, das proximal auf der transparenten Scheibe angeordnet ist, wobei das Pad (240, 242) eine Breite aufweist, die größer ist als die Breite der Leiterbahn (230, 232).

12. Die Fensterbaugruppe (314, 714) nach Anspruch 1, wobei die Steuerungseinrichtung (312, 712) eine Vielzahl von Leiterbahnen (350, 352, 790, 792) in Form eines ineinander greifenden Musters umfasst.

13. Die Fensterbaugruppe (514) nach Anspruch 1, wobei die Steuerungseinrichtung (512) in Form eines Spiralmusters (570) geformte Leiterbahnen (572, 574) umfasst.

14. Die Fensterbaugruppe (614, 714) nach Anspruch 1, wobei die Steuerungseinrichtung (612, 712) ein Widerstandselement (682, 798) und ein kapazitives Element (680, 790 & 792) umfasst.

15. Die Fensterbaugruppe (614, 714) nach Anspruch 14, wobei das Widerstandselement (682) und das kapazitive Element (680, 790 & 792) elektrisch parallel geschaltet sind.

16. Die Fensterbaugruppe (614, 714) nach Anspruch 15, wobei das Widerstandselement (682, 798) und das kapazitive Element (680, 790 & 792) eine Zeitkonstante bilden, und zur Beeinflussung eines Antriebssignals (810) auf der Grundlage der Zeitkonstante ausgelegt sind.

17. Die Fensterbaugruppe (614, 714) nach Anspruch 16, wobei die Zeitkonstante zur Änderung auf der Grundlage des Zustands der Steuerungseinrichtung (612, 712) ausgelegt ist.

18. Die Fensterbaugruppe (614, 714) nach Anspruch 17, die weiterhin einen Kontroller (616, 716) umfasst, der zum Erkennen der Änderung in der Zeitkonstante ausgelegt ist, um eine Änderung im Zustand der Steuerungseinrichtung (612, 712) zu detektieren.

## Revendications

1. Ensemble de fenêtre (14, 214, 314, 414, 514, 614, 714) pour véhicules, l'ensemble de fenêtre (14, 214, 314, 414, 514, 614, 714) comprenant un panneau transparent, une commande (12, 212, 312, 412, 512, 612, 712) intégrée dans le panneau transparent et configurée pour détecter une entrée utilisateur sur la base d'un changement de la propriété électrique de la commande (12, 212, 312, 412, 512, 612, 712), **caractérisé en ce que** la commande (12, 212, 312, 412, 512, 612, 712) est un commutateur activé par un contact avec le panneau transparent à proximité du commutateur, et dans lequel la commande (12, 212, 312, 412, 512, 612, 712) comprend un élément parmi une encre conductrice imprimée sur le panneau transparent, un film conducteur et un polymère conducteur.

2. Ensemble de fenêtre (14, 214, 314, 414, 514, 614, 714) selon la revendication 1, dans lequel le panneau transparent comprend un panneau en verre.

3. Ensemble de fenêtre (14, 214, 314, 414, 514, 614, 714) selon la revendication 1, dans lequel le panneau transparent comprend un panneau en matière plastique.

4. Ensemble de fenêtre (14, 214, 314, 414, 514, 614, 714) selon la revendication 3, dans lequel le vitrage en matière plastique comprend un panneau en polycarbonate.

5. Ensemble de fenêtre (14, 214, 314, 414, 514, 614, 714) selon la revendication 4, dans lequel le panneau en polycarbonate est un panneau en polycarbonate multicouche, et une première portion de la commande (12, 212, 312, 412, 512, 612, 712) se trouve sur une surface d'une première couche du panneau en polycarbonate multicouche et une deuxième portion de la commande (12, 212, 312, 412, 512, 612, 712) se trouve sur une surface d'une deuxième couche du panneau en polycarbonate multicouche.

6. Ensemble de fenêtre (14, 214, 314, 414, 514, 614, 714) selon la revendication 1, comprenant en outre un contrôleur (16, 216, 316, 416, 516, 616, 716) en communication électrique avec la commande (12, 212, 312, 412, 512, 612, 712).

7. Ensemble de fenêtre (14, 214, 314, 414, 514, 614, 714) selon la revendication 6, dans lequel la commande (12, 212, 312, 412, 512, 612, 712) est configurée pour commander un dégivreur de véhicule (20) sur la base d'un état de la commande (12, 212, 312, 412, 512, 612, 712).

8. Ensemble de fenêtre (14, 214, 314, 414, 514, 614, 714) selon la revendication 6, dans lequel la commande (12, 212, 312, 412, 512, 612, 712) est configurée pour commander un système de positionnement de fenêtre (22) sur la base d'un état de la commande (12, 212, 312, 412, 512, 612, 712).

9. Ensemble de fenêtre (14, 214, 314, 414, 514, 614, 714) selon la revendication 1, dans lequel la commande (12, 212, 312, 412, 512, 612, 712) comprend une commande capacitive.

10. Ensemble de fenêtre (14, 214, 314, 414, 514, 614, 714) selon la revendication 9, **caractérisé en ce qu'**une première portion de la commande capacitive se trouve sur une première couche du panneau transparent et une deuxième portion de la commande capacitive se trouve sur une deuxième couche du panneau transparent.

11. Ensemble de fenêtre (214) selon la revendication 1, dans lequel la commande (212) comprend une première et deuxième trace (230, 232), chaque trace (230, 232) étant en communication électrique avec une plage de connexion (240, 242) située à proximité sur le panneau transparent, où la plage de connexion (240, 242) présente une largeur supérieure à la largeur de la trace (230, 232).

12. Ensemble de fenêtre (314, 714), selon la revendication 1, dans lequel la commande (312, 712) comprend une pluralité de traces (350, 352, 790, 792) dans un motif imbriqué.

13. Ensemble de fenêtre (514) selon la revendication 1, dans lequel la commande (512) comprend des traces (572, 574) formées dans un motif en spirale (570).

14. Ensemble de fenêtre (614, 714) selon la revendication 1, dans lequel la commande (612, 712) comprend un élément résistif (682, 798) et un élément capacitif (680, 790 et 792).

15. Ensemble de fenêtre (614, 714) selon la revendication 14, dans lequel l'élément résistif (682) et l'élément capacitif (680) se trouvent en connexion électrique parallèle.

16. Ensemble de fenêtre (614, 714) selon la revendication 15, dans lequel l'élément résistif (682, 798) et l'élément capacitif (680, 790 et 792) forment une constante de temps et sont configurés pour influencer un signal d'excitation (810) sur la base de la constante de temps.

17. Ensemble de fenêtre (614, 714) selon la revendication 16, dans lequel la constante de temps est configurée pour changer sur la base de l'état de la commande (612, 712).

18. Ensemble de fenêtre (614, 714) selon la revendication 17, comprenant en outre un contrôleur (616, 716) configuré pour capter le changement de la constante de temps afin de détecter un changement de l'état de la commande (612, 712).
